# EUROPÄISCHE PATENTSCHRIFT

(11) **EP 4 554 013 B1**
(45) Veröffentlichungstag und Bekanntmachung des Hinweises auf die Patenterteilung: **08.07.2026**
(21) Anmeldenummer: 23208297.4
(22) Anmeldetag: 07.11.2023
(51) Int. Cl.: H01R 13/53, B60L 53/16, H01H 33/59, H02H 3/087, H02H 1/00, H01H 1/00

(54) **LICHTBOGENMINDERNDES ELEKTRISCHES STECKVERBINDUNGSSYSTEM**
ARC-REDUCING ELECTRICAL PLUG-IN CONNECTION SYSTEM
SYSTÈME DE CONNEXION ÉLECTRIQUE À FICHE RÉDUISANT LES ARCS ÉLECTRIQUES

(43) Veröffentlichungstag der Anmeldung: 14.05.2025
(73) Patentinhaber: Lunatone Industrielle Elektronik GmbH, 1210 Wien (AT)
(72) Erfinder: Mair, Alexander, 2285 Breitstetten (AT)
(74) Vertreter: Patentanwaltskanzlei Matschnig & Forsthuber OG

(56) Entgegenhaltungen:
- EP-B1- 1 300 919
- JP-A- 2004 158 331
- US-A1- 2023 178 925

## Beschreibung

Die Erfindung betrifft eine lichtbogenminderndes elektrisches Steckverbindungssystem für Gleichspannungssysteme in Höhe von zumindest 100 V, umfassend einen ersten Stecker und einen damit mechanisch und elektrisch verbindbaren komplementären zweiten Stecker.

Aus dem Stand der Technik sind zahlreiche unterschiedliche Steckverbindungssystem bekannt geworden, wie zum Beispiel beschrieben in Dokumente US2023/178925A1, JP 2004 158331 A oder EP 1 300 919 B1. Insbesondere bei dem Einsatz von Anwendungen, bei denen höhere Leistungen von mehreren Kilowatt, insbesondere über 50 kW, übertragen werden müssen, bestehen unterschiedliche Technologien, die eine sichere und gleichzeitig möglichst verlustfrei Energieübertragung ermöglichen sollen. In diesem Zusammenhang haben sich beispielsweise bei Ladestationen für Elektrofahrzeuge unterschiedliche Stecksysteme etabliert. Den gängigen Stecksystemen ist dabei gemein, dass diese eine Verriegelung aufweisen, um ein ruckartiges Lösen der Steckverbindung während eines Ladevorganges zu verhindern. In der Regel muss der Ladevorgang zuerst über einen Tastendruck oder eine Software-Eingabe abgebrochen werden, sodass kein Strom über die Steckverbindung übertragen wird, und erst in diesem stromlosen Zustand die Verriegelung gelöst wird. Anderenfalls besteht bei herkömmlichen Stecksystemen die Gefahr, dass ein massiver Lichtbogen entsteht, der die Kontakte der Steckverbindung schädigen kann und/oder die an der Energieübertragung beteiligten verbleibenden elektrischen Komponenten beschädigt werden können.

Aus der Hochspannungstechnik sind hingegen Schaltvorrichtung bekannt, in denen spezielle Gase oder Löscheinrichtungen vorgesehen sind, um das Entstehen von Lichtbögen zu verhindern, oder deren Brenndauer zumindest deutlich zu reduzieren.

Die aus dem Stand der Technik bekannten Maßnahmen sind technisch aufwendig und mit signifikanten Kosten verbunden. Zudem ist zum Beispiel das Vorsehen einer manuellen Verriegelung dem Benutzungskomfort abträglich.

Eine Aufgabe der Erfindung besteht darin ein elektrisches Steckverbindungssystem zu schaffen, das eine einfache und gleichzeitig sichere Bedienung ermöglicht.

Diese Aufgabe wird mit einem lichtbogenmindernden Steckverbindungsystem der eingangs genannten Art gelöst, bei welchem erfindungsgemäß der erste Stecker drei Steckkontakte aufweist, wovon zwei Steckkontakte miteinander elektrisch parallelgeschaltet sind und ein Steckkontaktpaar ausbilden, wobei der zweite Stecker drei zu den Steckkontakten des ersten Steckers korrespondierende Steckkontakte aufweist, wobei jene Steckkontakte des zweiten Steckers, die zum Eingriff in das Steckkontaktpaar ausgebildet sind, voneinander getrennte elektrisch Leitungen aufweisen, nachfolgend Umschaltleitungen genannt, wobei das elektrische Steckverbindungssystem weiters eine getaktet schaltbare Schaltvorrichtung, sowie eine Steuereinheit zur Ansteuerung der Schaltvorrichtung umfasst, wobei die Schaltvorrichtung zwei Schaltelemente mit je einem Schaltelementeingang und einem Schaltelementausgang aufweist, wobei jede Umschaltleitung mit je einem Schaltelementeingang verbunden ist, und die Schaltelementausgänge elektrisch mit einer gemeinsamen elektrischen Leitung verbunden sind, wobei die Steuereinheit zur getakteten Ansteuerung der Schaltelemente eingerichtet ist und wobei die Steuereinheit weiters dazu eingerichtet ist, in einen Energieübertragungsbetriebszustand versetzt zu werden, in dem elektrische Energie über die das Steckverbindungssystem übertragen werden soll, wobei in diesem Energieübertragungsbetriebszustand die Ansteuerung durch die Steuereinheit so gewählt ist, dass die Schaltelemente wechselweise ein- und ausgeschaltet werden, wobei sich die Einschaltzeitdauern der Schaltelemente bei jedem Schaltvorgang zumindest zeitweise überlappen, sodass zu jedem Zeitpunkt eine elektrische Verbindung von zumindest einer Umschaltleitung zur gemeinsamen elektrischen Leitung besteht.

Danke der Erfindung wird ein robustes und technisch einfach umsetzbares System geschaffen, das das Auftreten von Lichtbögen aufgrund der getakteten Ein- und Ausschaltung der Schaltelemente effektiv Unterdrückt bzw. diese durch Ausschalten der Schaltelemente effektiv löscht. Durch zeitliche Überlappung der Einschaltzeitdauern der Schaltelemente wird gleichzeitig erreicht, dass die elektrische Verbindung zu jedem Zeitpunkt bei geschlossener Steckverbindung besteht. Dieses Steckverbindungssystem kann für Gleichspannungssysteme in Höhe von 100 V oder höher eingesetzt werden und dabei beispielsweise Leistungen von über 50 kW übertragen.

Die Schaltelemente werden dabei vorzugsweise getaktet angesteuert, wobei diese z.B. auch für eine volle Taktdauer eingeschaltet sein können und Abschaltungen nur zu manchen Taktzeitpunkten erfolgen. Die Häufigkeit der Ausschaltvorgänge wird vorzugsweise so gewählt, dass im Falle eines Trennens der Steckverbindung unter Last ein etwaiger Lichtbogen rasch gelöscht wird. Die Schaltelemente können z.B. als entsprechend der angeforderten Leistung dimensionierte schaltbare Halbleiterbauelemente realisiert sein.

Insbesondere kann vorgesehen sein, dass innerhalb jedes Taktintervalls, innerhalb dem eines der Schaltelemente eingeschaltet wird, zumindest ein Zeitpunkt gegeben ist, in dem das andere Schaltelement zumindest vorübergehend ausgeschaltet ist.

Weiters kann vorgesehen sein, dass die Steuereinheit dazu eingerichtet ist, die Schaltelemente getaktet ein- und Auszuschalten, wobei der Taktfrequenz der Ein- und Ausschaltung zumindest 25 Hz, vorzugsweise zumindest 50 Hz, beträgt.

Insbesondere kann vorgesehen sein, dass die Schaltvorrichtung in den ersten oder in den zweiten Stecker integriert ist.

Weiters kann vorgesehen sein, dass Steuereinheit in den ersten oder in den zweiten Stecker integriert ist.

Insbesondere kann vorgesehen sein, dass die Schaltelemente IGBT-Schaltelemente sind.

Weiters kann vorgesehen sein, dass die Schaltelemente FET-Schaltelemente sind.

Insbesondere kann vorgesehen sein, dass der erste und der zweite Stecker miteinander verriegelungsfrei mechanisch verbindbar und verriegelungsfrei voneinander lösbar ausgebildet sind.

Weiters kann vorgesehen sein, dass die Steuereinheit mit Steckkontakten des ersten oder zweiten Steckers verbunden ist, und dazu eingerichtet ist, mittels elektrischer Gleichspannung, die über die besagten Steckkontakte führbar ist, elektrisch versorgt zu werden. D.h. die Versorgung kann z.B. autark von dem Bordnetz eines Autos oder autark von einer gesonderten Speiseleitung einer Ladestation erfolgen.

Insbesondere kann vorgesehen sein, dass die Steuereinheit weiters dazu eingerichtet ist, in einem netztrennenden Zustand versetzt zu werden, in dem beide Schaltelemente ausgeschaltet sind. Auf diese Weise kann die elektrische Verbindung auch bei Vorhandensein einer geschlossenen Steckverbindung getrennt werden.

Weiters kann vorgesehen sein, dass die Einschaltzeitdauern der beiden Schaltelemente eine Zeitdauer von zumindest 51%, vorzugsweise zumindest 75%, besonders bevorzugt zwischen 80% und 99%, insbesondere zumindest 99%, einer Taktperiodendauer betragen.

Anders ausgedrückt kann vorgesehen sein, dass die Ausschaltzeiten weniger als 50% eines Taktintervalls betragen. Vorzugsweise können diese weniger als 1% betragen. Auf diese Weise teilt sich auf beide Schaltelemente für den Großteil der Gesamtzeitdauer auf, sodass etwaige Verluste an den Schaltelementen reduziert werden können.

Insbesondere kann vorgesehen sein, dass die Einschaltzeitdauern der beiden Schaltelemente gleich sind. Weiters kann dabei vorgesehen sein, dass durch die Steuereinheit die Einschalt- und Ausschaltzeitpunkte der Schaltelemente dergestalt gewählt sind, dass für jede Folge von Taktperioden mit gleicher Einschaltzeitdauer die Zeitdauern, in der beide Schaltelemente gleichzeitig eingeschaltet sind, sowohl für den Wechsel von dem ersten Schaltelement auf das zweite Schaltelement als auch umgekehrt gleich sind.

Insbesondere kann vorgesehen sein, dass die Einschaltzeitdauern der beiden Schaltelemente variabel sind und das Steckverbindungssystem eine Spannungserfassungseinrichtung aufweist, die dazu eingerichtet ist, eine an dem Steckverbindungssystem anliegende Gleichspannung zu messen, wobei das Steckverbindungssystem dazu eingerichtet ist, die Einschaltzeitdauern der Schaltelemente in Abhängigkeit von der Höhe der Gleichspannung zu verändern, wobei mit zunehmender Höhe der Gleichspannung die Einschaltzeitdauern verkürzt werden.

Weiters kann vorgesehen sein, dass die Einschaltzeitdauern der beiden Schaltelemente variabel sind und das Steckverbindungssystem eine Spannungserfassungseinrichtung aufweist, die dazu eingerichtet ist, eine an dem Steckverbindungssystem anliegende Gleichspannung zu messen, wobei das Steckverbindungssystem dazu eingerichtet ist, die Schaltfrequenz der Schaltelemente in Abhängigkeit von der Höhe der Gleichspannung zu verändern, wobei mit zunehmender Höhe der Gleichspannung die Schaltfrequenz erhöht wird.

Für höhere Spannung kann z.B. eine höhere Frequenz des Taktes der Schaltelemente vorgesehen sind, und dabei kann z.B. auch die Ausschaltzeitdauer erhöht werden, um das Löschen von Lichtbögen bei einem Aussteckvorgang zusätzlich zu begünstigen. Beispielsweise kann bei einer Gleichspannung von 100V eine Frequenz von 25 Hz und eine Ausschaltzeitdauer von 1% der Taktzeitdauer vorgesehen sein, wobei diese Werte dann z.B. bei Vorliegen von 1000V Gleichspannung auf 400 Hz und 10% erhöht werden können.

Insbesondere kann vorgesehen sein, dass der erste Stecker oder der zweite Stecker mit der Last verbunden ist.

Weiters können z.B. Freilaufkreise, insbesondere Freilaufdioden, sowie ein Überspannungsschutz vorgesehen sein.

Die Erfindung ist im Folgenden anhand einer beispielhaften und nicht einschränkenden Ausführungsform näher erläutert, die in den Figuren veranschaulicht ist. Darin zeigen
Figur 1 eine schematische Darstellung einer Ausführungsform eines lichtbogenminderndes elektrisches Steckverbindungssystem gemäß der Erfindung,
Figur 2 eine schematische Darstellung einer zweiten Ausführungsform eines lichtbogenminderndes elektrisches Steckverbindungssystem gemäß der Erfindung, und
Figur 3a bis 3c zeitliche Verläufe der Einschalt- und Ausschaltvorgänge der Schaltelemente.

In den folgenden Figuren bezeichnen - sofern nicht anders angegeben - gleiche Bezugszeichen gleiche Merkmale.

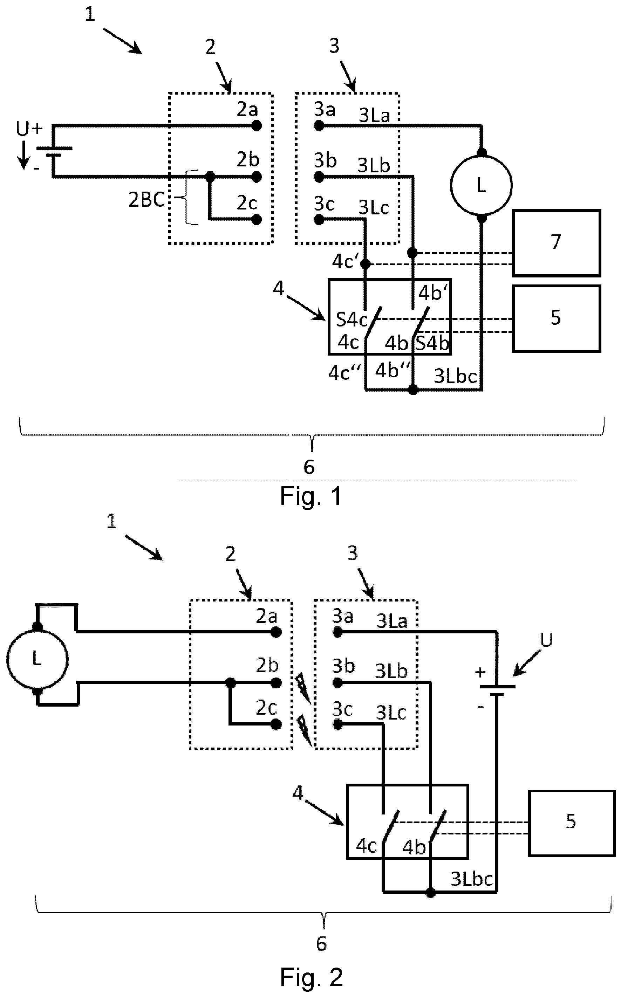

Figur 1 zeigt ein lichtbogenminderndes elektrisches Steckverbindungssystem 1 für Gleichspannungssysteme in Höhe von zumindest 100 V. Das Steckverbindungssystem 1 umfasst einen ersten Stecker 2 und einen damit mechanisch und elektrisch verbindbaren komplementären zweiten Stecker 3. Der erste Stecker 2 weist drei Steckkontakte 2a, 2b, 2c auf, wovon zwei Steckkontakte 2b, 2c miteinander elektrisch parallelgeschaltet sind und ein Steckkontaktpaar 2BC ausbilden. Der zweite Stecker 3 weist drei zu den Steckkontakten 2a, 2b, 2c des ersten Steckers 2 korrespondierende Steckkontakte 3a, 3b, 3c auf, wobei jene Steckkontakte 3b, 3c des zweiten Steckers 3, die zum Eingriff in das Steckkontaktpaar 2BC ausgebildet sind, voneinander getrennte elektrisch Leitungen aufweisen, nachfolgend Umschaltleitungen 3Lb, 3Lc genannt. Das elektrische Steckverbindungssystem 1 umfasst weiters eine getaktet schaltbare Schaltvorrichtung 4, sowie eine Steuereinheit 5 zur Ansteuerung der Schaltvorrichtung 4. Die Schaltvorrichtung 4 weist zwei Schaltelemente 4b, 4c mit je einem Schaltelementeingang 4b', 4c' und einem Schaltelementausgang 4b", 4c" auf, wobei jede Umschaltleitung 3Lb, 3Lc mit je einem Schaltelementeingang 4b', 4c' verbunden ist, und die Schaltelementausgänge 4b", 4c" elektrisch mit einer gemeinsamen elektrischen Leitung 3Lbc verbunden sind.

Die Steuereinheit 5 ist zur getakteten Ansteuerung der Schaltelemente 4b, 4c eingerichtet. Weiters ist sie dazu eingerichtet, in einen Energieübertragungsbetriebszustand versetzt zu werden, in dem elektrische Energie über die das Steckverbindungssystem 1 übertragen werden soll, wobei in diesem Energieübertragungsbetriebszustand die Ansteuerung durch die Steuereinheit 5 so gewählt ist, dass die Schaltelemente 4b, 4c wechselweise ein- und ausgeschaltet werden, wobei sich die Einschaltzeitdauern der Schaltelemente 4b, 4c bei jedem Schaltvorgang zumindest zeitweise überlappen, sodass zu jedem Zeitpunkt eine elektrische Verbindung von zumindest einer Umschaltleitung 4b', 4c' zur gemeinsamen elektrischen Leitung 3Lbc besteht. Das Versetzen in den Energieübertragungszustand kann z.B. automatisiert erfolgen, z.B. bei Schließen der Steckverbindung. Diese automatische Auslösung kann z.B. durch Auslösen eines mechanischen oder elektrischen Kontakts erzielt werden. Alternativ dazu kann z.B. auch einfach ein Schalter hierzu vorgesehen sein oder z.B. einfach der aktive Zustand per Software oder als default vorgegeben werden.

Als besonders kompakte und platzsparende Variante kann vorgesehen sein, dass die Schaltvorrichtung 4 in den ersten 2 oder in den zweiten Stecker 3 integriert ist. Dazu kann vorgesehen sein, dass die Steuereinheit 5 in den ersten 2 oder in den zweiten Stecker 3 integriert ist.

Insbesondere kann vorgesehen sein, dass die Schaltelemente 4b, 4c IGBT-Schaltelemente oder FET-Schaltelemente sind.

Weiters kann vorgesehen sein, dass erste 2 und der zweite Stecker 3 miteinander verriegelungsfrei mechanisch verbindbar und verriegelungsfrei voneinander lösbar ausgebildet sind.

Weiters kann vorgesehen sein, dass die Steuereinheit 5 mit Steckkontakten des ersten 2 oder zweiten Steckers 3 verbunden ist, und dazu eingerichtet ist, mittels elektrischer Gleichspannung, die über die besagten Steckkontakte führbar ist, elektrisch versorgt zu werden.

Insbesondere kann vorgesehen sein, dass die Steuereinheit 5 weiters dazu eingerichtet ist, in einem netztrennenden Zustand versetzt zu werden, in dem beide Schaltelemente 4b, 4c ausgeschaltet sind.

In Fig. 1 ist der erste Stecker 2 an der Energiequellenseite und der zweite Stecker 3 an der Lastseite angeordnet. Als Vorteil dieser Anordnung kann z.B. im Kontext eines E-Auto-Ladeanschlusses angegeben werden, dass dadurch die Sicherheit besonders erhöht wird, weil jedes entsprechend ausgestattete Auto unabhängig von dem Ladestationdesign bereits für sich genommen die lichtbogenhemmende Wirkung aufweist und Ladestationen daher nicht extra diesbezüglich optimiert werden müssen. Der Fahrzeughersteller hat daher volle Kontrolle über dieses Feature.

Die Ausführungsform von Fig. 2 zeigt eine Anordnung, in der der erste Stecker 2 mit der Last verbunden ist und der zweite Stecker 3 mit der Energiequelle verbunden ist. Ein Vorteil dieser Anordnung liegt darin, dass dadurch die Integration auf der Lastseite, z.B. beim E-Auto, entfallen kann. Auf diese Weise können Kosten gespart werden, da eine Ladestation häufig zur elektrischen Versorgung einer Vielzahl von Verbrauchern eingesetzt wird.

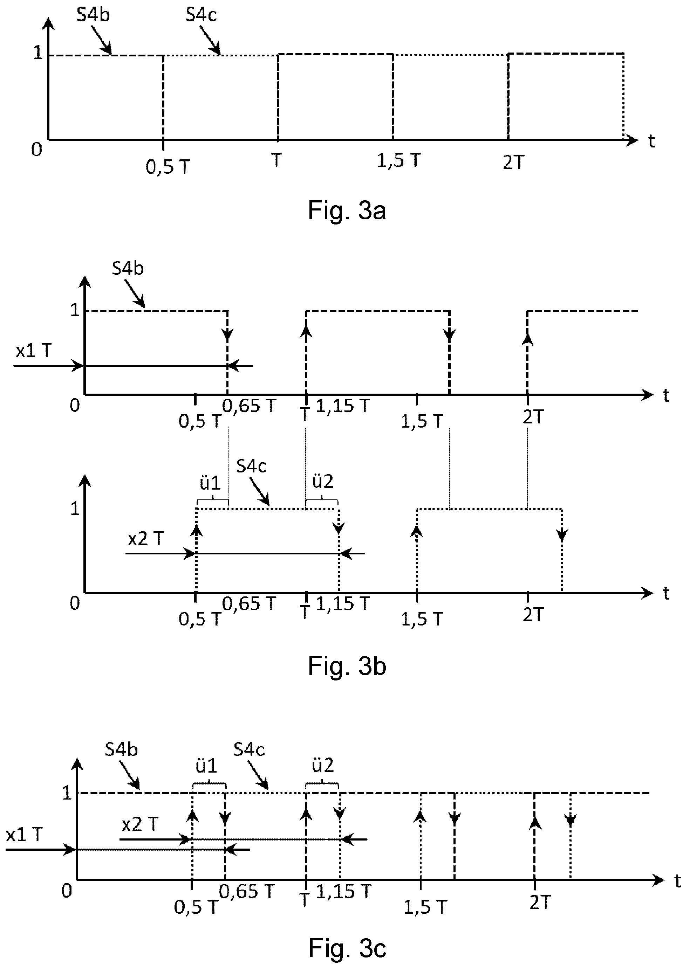

Figur 3a bis 3c zeigen zeitliche Verläufe der Einschalt- und Ausschaltvorgänge der Schaltelemente 4b und 4c. Fig. 3a zeigt jene Variante, in der die Einschaltzeitdauer jeweils in etwa 50% der Taktzeitdauer T beträgt, wobei die Ein- und Ausschaltzeitpunkte der Schaltelemente 4c und 4b einander überlappen. S4b bezeichnet das Signal bzw. den Schaltzustand des Schalters 4b, wobei der Wert 1 den geschlossenen Zustand repräsentiert. Analoges gilt für das Signal S4c mit Blick auf das zweite Schaltelement 4c.

Grundsätzlich kann vorgesehen sein, dass für jedes Taktintervalls, innerhalb dem eines der Schaltelemente 4b, 4c eingeschaltet wird, zumindest ein Zeitpunkt gegeben ist, in dem das andere Schaltelement 4c, 4b zumindest vorübergehend ausgeschaltet ist. Insbesondere kann vorgesehen sein, dass die Steuereinheit 5 dazu eingerichtet ist, die Schaltelemente 4b, 4c getaktet ein- und Auszuschalten, wobei der Taktfrequenz (also 1/T) der Ein- und Ausschaltung zumindest 25 Hz, vorzugsweise zumindest 50 Hz, beträgt.

Weiters kann vorgesehen sein, dass die Einschaltzeitdauern x1 T sowie x2 T der beiden Schaltelemente 4b, 4c eine Zeitdauer von zumindest 51%, vorzugsweise zumindest 75%, besonders bevorzugt zwischen 80% und 99%, insbesondere zumindest 99%, einer Taktperiodendauer T betragen. x1 sowie x2 betragen in diesem Fall daher zumindest 51% bzw. zumindest den Wert 0,51.

Mit Blick auf Fig. 3b sei erwähnt, dass vorgesehen sein kann, dass die Einschaltzeitdauern x1 T, x2 T der beiden Schaltelemente 4b, 4c gleich sind, d.h. x1=x2=0, 65 bzw. 65% im vorliegenden Beispiel. Weiters kann dabei vorgesehen sein, dass durch die Steuereinheit 5 die Einschalt- und Ausschaltzeitpunkte der Schaltelemente 4b, 4c dergestalt gewählt sind, dass für jede Folge von Taktperioden T mit gleicher Einschaltzeitdauer x1 T, x2 T die Zeitdauern ü1, ü2, in der beide Schaltelemente 4b, 4c gleichzeitig eingeschaltet sind, sowohl für den Wechsel ü1 von dem ersten Schaltelement 4b auf das zweite Schaltelement 4c als auch umgekehrt ü2 gleich sind. D.h. ü1 = ü2, wodurch ein besonders gleichmäßiger wechselweiser Übergang der Last zwischen den Schaltern erfolgt.

Insbesondere kann vorgesehen sein, dass die Einschaltzeitdauern x1 T, x2 T der beiden Schaltelemente 4b, 4c variabel sind und das Steckverbindungssystem 1 eine Spannungserfassungseinrichtung 7 aufweist, die dazu eingerichtet ist, eine an dem Steckverbindungssystem 1 anliegende Gleichspannung U zu messen, wobei das Steckverbindungssystem 1 dazu eingerichtet ist, die Einschaltzeitdauern x1 T, x2 T der Schaltelemente 4b, 4c in Abhängigkeit von der Höhe der Gleichspannung U zu verändern, wobei mit zunehmender Höhe der Gleichspannung U die Einschaltzeitdauern verkürzt werden.

Weiters kann vorgesehen sein, dass die Einschaltzeitdauern x1 T, x2 T der beiden Schaltelemente 4b, 4c variabel sind und das Steckverbindungssystem 1 eine Spannungserfassungseinrichtung 7 aufweist, die dazu eingerichtet ist, eine an dem Steckverbindungssystem 1 anliegende Gleichspannung U zu messen, wobei das Steckverbindungssystem 1 dazu eingerichtet ist, die Schaltfrequenz der Schaltelemente 4b, 4c in Abhängigkeit von der Höhe der Gleichspannung U zu verändern, wobei mit zunehmender Höhe der Gleichspannung U die Schaltfrequenz erhöht wird.

Fig. 3c zeigt die zeitliche Überlappung der beiden Verläufe gemäß Fig. 3b in einem gemeinsamen Diagramm.

Mit Blick auf Fig. 1 und 2 sei erwähnt, dass die Erfindung auch ein Energieversorgungssystem 6 betrifft, welches eine Gleichspannungsquelle U, eine elektrische Last L sowie ein erfindungsgemäßes Steckverbindungssystem 1 umfasst. Dieses Energieversorgungssystem 6 ist zur elektrischen Verbindung der Gleichspannungsquelle U mit der Last L eingerichtet.

Es kann vorgesehen sein, dass der erste Stecker 2 oder der zweite Stecker 3 mit der Last L verbunden ist.

## Patentansprüche

1. Lichtbogenminderndes elektrisches Steckverbindungssystem (1) für Gleichspannungssysteme in Höhe von zumindest 100 V, umfassend
- einen ersten Stecker (2) und
- einen damit mechanisch und elektrisch verbindbaren komplementären zweiten Stecker (3),
wobei der erste Stecker (2) drei Steckkontakte (2a, 2b, 2c) aufweist, wovon zwei Steckkontakte (2b, 2c) miteinander elektrisch parallelgeschaltet sind und ein Steckkontaktpaar (2BC) ausbilden, wobei der zweite Stecker (3) drei zu den Steckkontakten (2a, 2b, 2c) des ersten Steckers (2) korrespondierende Steckkontakte (3a, 3b, 3c) aufweist, wobei jene Steckkontakte (3b, 3c) des zweiten Steckers (3), die zum Eingriff in das Steckkontaktpaar (2BC) ausgebildet sind, voneinander getrennte elektrisch Leitungen aufweisen, nachfolgend Umschaltleitungen (3Lb, 3Lc) genannt,
**dadurch gekennzeichnet, dass**
das elektrische Steckverbindungssystem (1) weiters eine getaktet schaltbare Schaltvorrichtung (4), sowie
- eine Steuereinheit (5) zur Ansteuerung der Schaltvorrichtung (4) umfasst,
wobei die Schaltvorrichtung (4) zwei Schaltelemente (4b, 4c) mit je einem Schaltelementeingang (4b', 4c') und einem Schaltelementausgang (4b", 4c") aufweist, wobei jede Umschaltleitung (3Lb, 3Lc) mit je einem Schaltelementeingang (4b', 4c') verbunden ist, und die Schaltelementausgänge (4b", 4c") elektrisch mit einer gemeinsamen elektrischen Leitung (3Lbc) verbunden sind,
wobei die Steuereinheit (5) zur getakteten Ansteuerung der Schaltelemente (4b, 4c) eingerichtet ist und wobei die Steuereinheit (5) weiters dazu eingerichtet ist, in einen Energieübertragungsbetriebszustand versetzt zu werden, in dem elektrische Energie über die das Steckverbindungssystem (1) übertragen werden soll,
wobei in diesem Energieübertragungsbetriebszustand die Ansteuerung durch die Steuereinheit (5) so gewählt ist, dass die Schaltelemente (4b, 4c) wechselweise ein- und ausgeschaltet werden, wobei sich die Einschaltzeitdauern der Schaltelemente (4b, 4c) bei jedem Schaltvorgang zumindest zeitweise überlappen, sodass zu jedem Zeitpunkt eine elektrische Verbindung von zumindest einer Umschaltleitung (4b', 4c') zur gemeinsamen elektrischen Leitung (3Lbc) besteht.

2. Steckverbindungssystem (1) nach Anspruch 1, wobei innerhalb jedes Taktintervalls, innerhalb dem eines der Schaltelemente (4b, 4c) eingeschaltet wird, zumindest ein Zeitpunkt gegeben ist, in dem das andere Schaltelement (4c, 4b) zumindest vorübergehend ausgeschaltet ist.

3. Elektrisches Steckverbindungssystem nach einem der vorhergehenden Ansprüche, wobei die Steuereinheit (5) dazu eingerichtet ist, die Schaltelemente (4b, 4c) getaktet ein- und Auszuschalten, wobei der Taktfrequenz der Ein- und Ausschaltung zumindest 25 Hz, vorzugsweise zumindest 50 Hz, beträgt.

4. Steckverbindungssystem (1) nach einem der vorhergehenden Ansprüche, wobei die Schaltvorrichtung (4) in den ersten (2) oder in den zweiten Stecker (3) integriert ist.

5. Steckverbindungssystem (1) nach einem der vorhergehenden Ansprüche, wobei die Steuereinheit (5) in den ersten (2) oder in den zweiten Stecker (3) integriert ist.

6. Steckverbindungssystem (1) nach einem der vorhergehenden Ansprüche, wobei die Schaltelemente (4b, 4c) IGBT-Schaltelemente sind.

7. Steckverbindungssystem (1) nach einem der vorhergehenden Ansprüche, wobei die Schaltelemente (4b, 4c) FET-Schaltelemente sind.

8. Steckverbindungssystem (1) nach einem der vorhergehenden Ansprüche, wobei der erste (2) und der zweite Stecker (3) miteinander verriegelungsfrei mechanisch verbindbar und verriegelungsfrei voneinander lösbar ausgebildet sind.

9. Steckverbindungssystem (1) nach einem der vorhergehenden Ansprüche, wobei die Steuereinheit (5) mit Steckkontakten des ersten (2) oder zweiten Steckers (3) verbunden ist, und dazu eingerichtet ist, mittels elektrischer Gleichspannung, die über die besagten Steckkontakte führbar ist, elektrisch versorgt zu werden.

10. Steckverbindungssystem (1) nach einem der vorhergehenden Ansprüche, wobei die Steuereinheit (5) weiters dazu eingerichtet ist, in einem netztrennenden Zustand versetzt zu werden, in dem beide Schaltelemente (4b, 4c) ausgeschaltet sind.

11. Steckverbindungssystem (1) nach einem der vorhergehenden Ansprüche, wobei die Einschaltzeitdauern der beiden Schaltelemente (4b, 4c) eine Zeitdauer von zumindest 51%, vorzugsweise zumindest 75%, besonders bevorzugt zwischen 80% und 99%, insbesondere zumindest 99%, einer Taktperiodendauer (T) betragen.

12. Steckverbindungssystem (1) nach einem der vorhergehenden Ansprüche, wobei die Einschaltzeitdauern (x1 T, x2 T) der beiden Schaltelemente (4b, 4c) variabel sind und das Steckverbindungssystem (1) eine Spannungserfassungseinrichtung (7) aufweist, die dazu eingerichtet ist, eine an dem Steckverbindungssystem (1) anliegende Gleichspannung (U) zu messen, wobei das Steckverbindungssystem (1) dazu eingerichtet ist, die Einschaltzeitdauern (x1 T, x2 T) der Schaltelemente (4b, 4c) in Abhängigkeit von der Höhe der Gleichspannung (U) zu verändern, wobei mit zunehmender Höhe der Gleichspannung (U) die Einschaltzeitdauern verkürzt werden.

13. Steckverbindungssystem (1) nach einem der vorhergehenden Ansprüche, wobei die Einschaltzeitdauern (x1 T, x2 T) der beiden Schaltelemente (4b, 4c) variabel sind und das Steckverbindungssystem (1) eine Spannungserfassungseinrichtung (7) aufweist, die dazu eingerichtet ist, eine an dem Steckverbindungssystem (1) anliegende Gleichspannung (U) zu messen, wobei das Steckverbindungssystem (1) dazu eingerichtet ist, die Schaltfrequenz der Schaltelemente (4b, 4c) in Abhängigkeit von der Höhe der Gleichspannung (U) zu verändern, wobei mit zunehmender Höhe der Gleichspannung (U) die Schaltfrequenz erhöht wird.

14. Energieversorgungssystem (6) umfassend eine Gleichspannungsquelle (U), eine elektrische Last (L) sowie ein Steckverbindungssystem (1) nach einem der vorhergehenden Ansprüche zur elektrischen Verbindung der Gleichspannungsquelle (U) mit der Last (L).

15. Energieversorgungssystem (6) nach Anspruch 14, wobei der erste Stecker (2) oder der zweite Stecker (3) mit der Last (L) verbunden ist.

## Claims

1. Arc-reducing electrical plug connection system (1) for DC voltage systems of at least 100 V, comprising
- a first plug (2) and
- a complementary second plug (3) that can be mechanically and electrically connected to it,
wherein
the first plug (2) has three plug contacts (2a, 2b, 2c), two of which (2b, 2c) are electrically connected in parallel with each other and form a plug contact pair (2BC), wherein the second plug (3) has three plug contacts (3a, 3b, 3c) corresponding to the plug contacts (2a, 2b, 2c) of the first plug (2), 3c), wherein those plug contacts (3b, 3c) of the second plug (3) which are designed to engage with the plug contact pair (2BC) have electrically conductive lines separated from one another, hereinafter referred to as switching lines (3Lb, 3Lc),
- **characterized in that** the electrical plug connection system (1) further comprises a clocked switchable switching device (4), as well as
- comprises a control unit (5) for controlling the switching device (4),
wherein the switching device (4) has two switching elements (4b, 4c), each with a switching element input (4b', 4c') and a switching element output (4b", 4c"), wherein each switching line (3Lb, 3Lc) is connected to one switching element input (4b', 4c') and the switching element outputs (4b", 4c") are electrically connected to a common electrical line (3Lbc),
wherein the control unit (5) is designed for clocked control of the switching elements (4b, 4c) and wherein the control unit (5) is further configured to be set to an energy transfer operating state in which electrical energy is to be transferred via the plug connection system (1),
wherein, in this energy transfer operating state, the control by the control unit (5) is selected such that the switching elements (4b, 4c) are switched on and off alternately, wherein the switch-on times of the switching elements (4b, 4c) overlap at least temporarily during each switching operation, so that at any given time there is an electrical connection from at least one switch line (4b', 4c') to the common electrical line (3Lbc).

2. Plug connection system (1) according to claim 1, wherein within each clock interval during which one of the switching elements (4b, 4c) is switched on, there is at least one point in time at which the other switching element (4c, 4b) is at least temporarily switched off.

3. Electrical plug connection system according to one of the preceding claims, wherein the control unit (5) is designed to switch the switching elements (4b, 4c) on and off in a clocked manner, wherein the clock frequency of the switching on and off is at least 25 Hz, preferably at least 50 Hz.

4. Plug connection system (1) according to one of the preceding claims, wherein the switching device (4) is integrated into the first (2) or second plug (3).

5. Plug connection system (1) according to one of the preceding claims, wherein the control unit (5) is integrated into the first (2) or second plug (3).

6. Plug connection system (1) according to one of the preceding claims, wherein the switching elements (4b, 4c) are IGBT switching elements.

7. Plug connection system (1) according to one of the preceding claims, wherein the switching elements (4b, 4c) are FET switching elements.

8. Plug connection system (1) according to one of the preceding claims, wherein the first (2) and second plugs (3) are designed to be mechanically connectable to each other without locking and detachable from each other without locking.

9. Plug connection system (1) according to one of the preceding claims, wherein the control unit (5) is connected to plug contacts of the first (2) or second plug (3) and is designed to be supplied with electrical power by means of direct voltage that can be conducted via said plug contacts.

10. Plug connection system (1) according to one of the preceding claims, wherein the control unit (5) is further adapted to be set to a mains-disconnecting state in which both switching elements (4b, 4c) are switched off.

11. Plug connection system (1) according to one of the preceding claims, wherein the switch-on times of the two switching elements (4b, 4c) amount to a time duration of at least 51%, preferably at least 75%, particularly preferably between 80% and 99%, in particular at least 99%, of a clock period duration (T).

12. Plug connection system (1) according to one of the preceding claims, wherein the switch-on times (x1 T, x2 T) of the two switching elements (4b, 4c) are variable and the plug connection system (1) has a voltage detection device (7) which is designed to measure a DC voltage (U) applied to the plug connection system (1), wherein the plug connection system (1) is designed to vary the switch-on times (x1 T, x2 T) of the switching elements (4b, 4c) as a function of the level of the DC voltage (U), whereby the switch-on times are shortened as the level of the DC voltage (U) increases.

13. Plug connection system (1) according to one of the preceding claims, wherein the switch-on times (x1 T, x2 T) of the two switching elements (4b, 4c) are variable and the plug connection system (1) has a voltage detection device (7) which is designed to measure a DC voltage (U) applied to the plug connection system (1), whereby the plug connection system (1) is designed to change the switching frequency of the switching elements (4b, 4c) depending on the level of the DC voltage (U), whereby the switching frequency is increased as the level of the DC voltage (U) increases.

14. Power supply system (6) comprising a DC voltage source (U), an electrical load (L), and a plug connection system (1) according to one of the preceding claims for electrically connecting the DC voltage source (U) to the load (L).

15. Power supply system (6) according to claim 14, wherein the first plug (2) or the second plug (3) is connected to the load (L).

## Revendications

1. Système de connexion électrique enfichable (1) réduisant les arcs électriques pour des systèmes à tension continue d'au moins 100 V, comprenant
- une première fiche (2) et
- une deuxième fiche complémentaire (3) pouvant être connectée mécaniquement et électriquement à celle-ci,
dans lequel
la première fiche (2) comporte trois contacts enfichables (2a, 2b, 2c), dont deux contacts enfichables (2b, 2c) sont connectés électriquement en parallèle l'un avec l'autre et forment une paire de contacts enfichables (2BC), la deuxième fiche (3) comportant trois contacts enfichables (3a, 3b, 3c) correspondant aux contacts enfichables (2a, 2b, 2c) de la première fiche (2), les contacts enfichables (3b, 3c) de la deuxième fiche (3) qui sont conçus pour s'engager dans la paire de contacts enfichables (2BC) comportant des lignes électriques séparées les unes des autres, appelées ci-après lignes de commutation (3Lb, 3Lc),
- **caractérisé en ce que** le système de connexion électrique enfichable (1) comprend en outre un dispositif de commutation (4) commutable de manière cadencée, ainsi qu'
- comprend une unité de commande (5) pour commander le dispositif de commutation (4),
le dispositif de commutation (4) comportant deux éléments de commutation (4b, 4c) avec chacun une entrée d'élément de commutation (4b', 4c') et une sortie d'élément de commutation (4b", 4c"), chaque ligne de commutation (3Lb, 3Lc) étant reliée à une entrée d'élément de commutation (4b', 4c') respective, et les sorties d'élément de commutation (4b", 4c") sont reliées électriquement à une ligne électrique commune (3Lbc),
l'unité de commande (5) étant conçue pour commander de manière cadencée les éléments de commutation (4b, 4c) et l'unité de commande (5) étant en outre conçue pour être mise dans un état de fonctionnement de transmission d'énergie dans lequel l'énergie électrique doit être transmise via le système de connexion enfichable (1),
dans lequel, dans cet état de fonctionnement de transmission d'énergie, la commande par l'unité de commande (5) est choisie de telle sorte que les éléments de commutation (4b, 4c) soient activés et désactivés en alternance, les durées d'activation des éléments de commutation (4b, 4c) se chevauchant au moins temporairement à chaque opération de commutation, de sorte qu'à tout moment, il existe une connexion électrique entre au moins une ligne de commutation (4b', 4c') et la ligne électrique commune (3Lbc).

2. Système de connexion enfichable (1) selon la revendication 1, dans lequel, à l'intérieur de chaque intervalle de temps pendant lequel l'un des éléments de commutation (4b, 4c) est activé, il existe au moins un moment où l'autre élément de commutation (4c, 4b) est au moins temporairement désactivé.

3. Système de connexion électrique selon l'une des revendications précédentes, dans lequel l'unité de commande (5) est conçue pour activer et désactiver les éléments de commutation (4b, 4c) de manière cadencée, la fréquence de cadence de l'activation et de la désactivation étant d'au moins 25 Hz, de préférence d'au moins 50 Hz.

4. Système de connexion enfichable (1) selon l'une des revendications précédentes, dans lequel le dispositif de commutation (4) est intégré dans la première (2) ou dans la deuxième fiche (3).

5. Système de connexion enfichable (1) selon l'une des revendications précédentes, dans lequel l'unité de commande (5) est intégrée dans la première (2) ou dans la deuxième fiche (3).

6. Système de connexion enfichable (1) selon l'une des revendications précédentes, dans lequel les éléments de commutation (4b, 4c) sont des éléments de commutation IGBT.

7. Système de connexion enfichable (1) selon l'une des revendications précédentes, dans lequel les éléments de commutation (4b, 4c) sont des éléments de commutation FET.

8. Système de connexion enfichable (1) selon l'une des revendications précédentes, dans lequel le premier fiche (2) et le deuxième fiche (3) sont conçus pour être reliés mécaniquement l'un à l'autre sans verrouillage et pour être séparés l'un de l'autre sans verrouillage.

9. Système de connexion enfichable (1) selon l'une des revendications précédentes, dans lequel l'unité de commande (5) est reliée à des contacts enfichables de la première (2) ou de la deuxième fiche (3) et est conçue pour être alimentée électriquement au moyen d'une tension continue pouvant être acheminée via lesdits contacts enfichables.

10. Système de connexion enfichable (1) selon l'une des revendications précédentes, dans lequel l'unité de commande (5) est en outre conçue pour être mise dans un état de déconnexion du réseau dans lequel les deux éléments de commutation (4b, 4c) sont désactivés.

11. Système de connexion enfichable (1) selon l'une des revendications précédentes, dans lequel les durées d'activation des deux éléments de commutation (4b, 4c) sont d'au moins 51 %, de préférence d'au moins 75 %, de manière particulièrement préférée comprises entre 80 % et 99 %, en particulier d'au moins 99 %, d'une durée de période d'horloge (T).

12. Système de connexion enfichable (1) selon l'une des revendications précédentes, dans lequel les durées d'activation (x1 T, x2 T) des deux éléments de commutation (4b, 4c) sont variables et le système de connexion enfichable (1) comporte un dispositif de détection de tension (7) qui est conçu pour mesurer une tension continue (U) appliquée au système de connexion enfichable (1), le système de connexion enfichable (1) étant conçu pour modifier les durées d'activation (x1 T, x2 T) des éléments de commutation (4b, 4c) en fonction de l'amplitude de la tension continue (U), les durées d'activation étant raccourcies lorsque l'amplitude de la tension continue (U) augmente.

13. Système de connexion enfichable (1) selon l'une des revendications précédentes, dans lequel les durées d'activation (x1 T, x2 T) des deux éléments de commutation (4b, 4c) sont variables et le système de connexion enfichable (1) comporte un dispositif de détection de tension (7) qui est conçu pour mesurer une tension continue (U) appliquée au système de connexion enfichable (1), le système de connexion enfichable (1) étant conçu pour modifier la fréquence de commutation des éléments de commutation (4b, 4c) en fonction de l'amplitude de la tension continue (U), la fréquence de commutation augmentant lorsque l'amplitude de la tension continue (U) augmente.

14. Système d'alimentation électrique (6) comprenant une source de tension continue (U), une charge électrique (L) et un système de connexion enfichable (1) selon l'une des revendications précédentes pour connecter électriquement la source de tension continue (U) à la charge (L).

15. Système d'alimentation électrique (6) selon la revendication 14, dans lequel le premier fiche (2) ou le deuxième fiche (3) est relié à la charge (L).
